# EUROPÄISCHE PATENTSCHRIFT

(11) **EP 3 932 170 B1**
(45) Veröffentlichungstag und Bekanntmachung des Hinweises auf die Patenterteilung: **01.10.2025**
(21) Anmeldenummer: 21183209.2
(22) Anmeldetag: 01.07.2021
(51) Int. Cl.: A01D 34/835

(54) **KRAUTTRENNVORRICHTUNG**
WEED SEPARATION DEVICE
DISPOSITIF DE SÉPARATION D'HERBE

(30) Priorität: 03.07.2020 DE 202020103886 U
(43) Veröffentlichungstag der Anmeldung: 05.01.2022
(73) Patentinhaber: Grimme Landmaschinenfabrik GmbH & Co. KG, 49401 Damme (DE)
(72) Erfinder: KLENKE, Bernd, 49456 Bakum (DE); WIESCHMANN, Jens, 49434 Neuenkirchen-Vörden (DE); VOGT, Matthias, 49448 Hüde (DE); EVELGÜNNE, Ralf, 48282 Emsdetten (DE)
(74) Vertreter: Wischmeyer, André

(56) Entgegenhaltungen:
- DE-A1- 102018 007 190
- DE-U1- 202010 003 067
- ES-A1- 2 321 361
- FR-A1- 2 891 692
- US-A- 6 065 274

## Beschreibung

Die Erfindung betrifft eine Krauttrennvorrichtung. Die Krauttrennvorrichtung ist zum Abtrennen von Kraut von Nutzpflanzen wie Speisezwiebeln ausgebildet. Die Krauttrennvorrichtung umfasst zumindest eine erste Rotationsvorrichtung. Die erste Rotationsvorrichtung ist zu einer Rotation um eine erste Trennrotationsachse ausgebildet. Außerdem weist die erste Rotationsvorrichtung zumindest ein im Betrieb rotierendes Trennelement auf. Weiterhin umfasst die Krauttrennvorrichtung eine zweite Rotationsvorrichtung. Die zweite Rotationsvorrichtung ist zu einer Rotation um eine zweite Trennrotationsachse ausgebildet. Außerdem weist die zweite Rotationsvorrichtung zumindest ein im Betrieb rotierendes Trennelement auf. Weiterhin umfasst die Krauttrennvorrichtung zumindest ein Antriebselement. Das Antriebselement ist zu einer Rotation um eine Antriebsrotationsachse ausgebildet. Außerdem ist das Antriebselement zu einer Leistungsübertragung zumindest mit der ersten Rotationsvorrichtung gekoppelt.

Die Krauttrennvorrichtung wird im Betrieb insbesondere von einem Träger- oder Antriebsfahrzeug über eine Nutzpflanzenkultur bewegt. Dabei rotieren die Trennelemente und trennen das Kraut von den restlichen Nutzpflanzenbestandteilen, insbesondere von in einem folgenden Arbeitsschritt zu erntenden Früchten.

Nachteilig bei bekannten, gattungsgemäßen Krauttrennvorrichtungen ist, dass sie über eine Vielzahl im Betrieb häufig ausfallender Bauteile verfügen, die zu umfangreichen Ausfallzeiten und zur Notwendigkeit des Vorhaltens einer Vielzahl von Reparaturteilen führen.

Aus der FR 2891692 A1 ist eine Krauttrennvorrichtung zum Abtrennen von Kraut von Nutzpflanzen mit zwei Rotationsvorrichtungen bekannt, die im Betrieb um Trennrotationsachsen rotieren. Des Weiteren weist die Krauttrennvorrichtung ein Antriebselement auf, das zu einer Rotation um eine Antriebsrotationsachse ausgebildet ist und das zu einer Leistungsübertragung mit einer der Rotationsvorrichtungen gekoppelt ist.

Die US 10,485,175 B2 offenbart einen Rasenmäher mit einer Vielzahl von rotierenden Wellen, die über einen Elektromotor angetrieben werden, von dessen Abtriebsrad ein Riemen zu einem Antriebsrad einer der rotierenden Wellen verläuft.

Ebenfalls ist aus der US 5,109,655 A ein Grasmähwerk bekannt, bei dem über eine mittels eines Riemens verbundene, hydraulisch angetriebene Antriebswelle eine Mehrzahl von Rotationsvorrichtungen antreibbar ist.

Aufgabe der vorliegenden Erfindung ist die Bereitstellung einer Krauttrennvorrichtung mit einer hohen Zuverlässigkeit und einem einfachen Aufbau.

Erfindungsgemäß wird die Aufgabe dadurch gelöst, dass die Antriebsrotationsachse und die zweite Trennrotationsachse durch zumindest einen gemeinsamen Punkt verlaufen. Insbesondere verlaufen die Antriebsrotationsachse und die zweite Trennrotationsachse koaxial, d.h. sind die genannten Achsen identisch.

Die erfindungsgemäße Krauttrennvorrichtung ist insbesondere zu einer Anwendung bei Speisezwiebeln, Kartoffeln und/oder weiteren Nutzpflanzen ausgelegt. Entlang der Trennrotationsachsen verläuft bevorzugt ein Abführkanal, durch den das von den Trennelementen geschnittene Kraut durch einen Luftstrom bevorzugt seitlich von den Nutzpflanzen weggeführt wird. Gegenüber des Abführkanals weist die Krauttrennvorrichtung bevorzugt eine Koppeleinrichtung zur Kopplung an das Träger- bzw. Antriebsfahrzeug auf.

Die Rotationsvorrichtungen sind insbesondere Schneidrotoren. Deren Trennelemente weisen bevorzugt zumindest eine Schneide auf, mit der sie im Betrieb auf das Kraut einwirken. Bevorzugt umfassen die Rotationsvorrichtungen zumindest zwei Trennelemente. Die Trennelemente sind bevorzugt drehbar an einem Trennelementträger der Rotationsvorrichtung, die sie mit ausbilden, angeordnet. Insbesondere haben die Rotationsvorrichtungen einen übereinstimmenden Radius, der bevorzugt zwischen 250 mm und 400 mm, besondere bevorzugt 300 mm oder 375 mm beträgt. Besonders bevorzugt sind die Rotationsvorrichtungen baugleich. Die Summe der Radien benachbarter Rotationsvorrichtungen übersteigt den Abstand ihrer Trennrotationsachsen insbesondere um zumindest 20 mm, bevorzugt um zumindest 30 mm, besonders bevorzugt um 35 mm oder 60 mm.

Die erste Trennrotationsachse und die zweite Trennrotationsachse sind bevorzugt parallel zueinander ausgebildet. Insbesondere verläuft zumindest die erste Trennrotationsachse zumindest anteilig, insbesondere ausschließlich in eine vertikale Richtung. Der Abstand der ersten Trennrotationsachse von der zweiten Trennrotationsachse ist insbesondere größer als sie Summe der Radien der ersten Rotationsvorrichtung und der zweiten Rotationsvorrichtung.

Das Antriebselement rotiert im Betrieb um die Antriebsrotationsachse. Bevorzugt ist das Antriebselement an einer Antriebswelle montiert, die von der Antriebsrotationsachse geschnitten wird. Insbesondere wird im Betrieb eine Leistung von der Antriebswelle auf das Antriebselement übertragen. Das Antriebselement gibt eine Leistung insbesondere im Bereich seines Außenradius ab, wodurch es die erste Rotationsvorrichtung antreibt.

Durch die Positionierung der Antriebsrotationsachse relativ zur zweiten Trennrotationsachse wird erreicht, dass ein das Antriebselement umfassender Antriebsstrang der Krauttrennvorrichtung besonders klein baut und die im Betrieb rotierenden bzw. umlaufenden Bauteile mit geringem Aufwand gelagert werden können. Durch die Anordnung des Antriebselementes und der zweiten Trennrotationsvorrichtung entlang der zweiten Trennrotationsachse können insbesondere die zweite Rotationsvorrichtung und das Antriebselement jeweils an einem Trägerelement gelagert werden. Zur weiteren Einsparung von ein Ausfallrisiko bergenden Bauteilen ließen sich das Antriebselement bzw. die Antriebswelle und die zweite Rotationsvorrichtung auch unmittelbar aneinander lagern. Hierdurch lässt sich die Zuverlässigkeit weiter erhöhen.

Bevorzugt ist das Antriebselement oder ein dazu ortsfestes, d.h. relativ zum Antriebselement unbewegliches, Übertragungselement, insbesondere sie Antriebswelle, zu einer Leistungsübertragung mit der zweiten Rotationsvorrichtung gekoppelt. Zu dieser Kopplung ist das Antriebselement bzw. das Übertragungselement insbesondere unmittelbar oder mittelbar mittels weiterer Bauteile mit der zweiten Rotationsvorrichtung verbunden. Hierdurch ist die Krauttrennvorrichtung insofern durch eine geringe Zahl an Bauteilen ausgebildet, als die erste und die zweite Rotationsvorrichtung im Betrieb von einem einheitlichen Antrieb angetrieben werden.

Besonders bevorzugt sind das Antriebselement und ein Wellenelement der zweiten Rotationsvorrichtung relativ zueinander ortsfest angeordnet. Dazu ist das Antriebselement oder die Antriebswelle insbesondere über einen Flansch mit dem Wellenelement verbunden. Alternativ dazu sind das Antriebselement und das Wellenelement mit insbesondere über eine Kupplung gekoppelt. Insbesondere bei einer nichtkoaxialen Lage der Antriebsrotationsachse und der zweiten Trennrotationsachse befindet sich zwischen dem Antriebselement bzw. der Antriebswelle und der zweiten Rotationsvorrichtung bevorzugt zumindest ein Kreuzgelenk oder eine Klauenkupplung. Das Trennelement der zweiten Rotationsvorrichtung ist bevorzugt an dem Wellenelement oder einem damit ortsfesten weiteren Bestandteil der zweiten Rotationsvorrichtung angeordnet. Durch diesen Aufbau wird im Antriebsstrang der zweiten Rotationsvorrichtung insbesondere ein Riemen- oder Kettentrieb verhindert, der ein erhöhtes Ausfallrisiko bedeutete. Die mögliche Leistungsübertragung an die zweite Rotationsvorrichtung einzig anhand starrer Bauteile, die bevorzugt jeweils die zweite Trennrotationsachse schneiden, bedeutet eine deutliche erhöhte Zuverlässigkeit.

Vorzugsweise wird im Betrieb eine Leistung von dem Antriebselement an die erste Rotationsvorrichtung kraft- oder formschlüssig übertragen. Insbesondere wird die Leistung im Betrieb mittels eines Riemen- oder Kettengetriebes übertragen. Dadurch lässt sich der radiale Abstand zwischen der ersten Trennrotationsachse und dem Antriebselement überbrücken, ohne dass dazu weitere gesondert zu lagernde Bauteile oder ein größerer Bauraum nötig sind.

Vorzugsweise umfasst die erste Rotationsvorrichtung ein erstes Abtriebselement, das zumindest eine Riemenscheibe aufweist. Außerdem weist bevorzugt das Antriebselement zumindest eine Riemenscheibe auf. Das Antriebselement und das erste Abtriebselement sind besonders bevorzugt mittels eines ersten Riemens gekoppelt. Der erste Riemen hat bevorzugt einen in seiner Umlaufrichtung unveränderlichen Querschnitt. Zumindest eine der Riemenscheiben, insbesondere beide Riemenscheiben, weist bevorzugt eine um die jeweilige Rotationsachse umlaufende Nut auf. Alternativ zur Riemenscheibe handelt es sich im Falle eines Kettengetriebes bevorzugt um eine Zahnscheibe bzw. ein Zahnrad. Durch diese Ausbildung kann auf im Getriebebau bewährte Mittel zur Leistungsübertragung zurückgegriffen werden. Weiterhin ist bei der Montage oder Reparatur eines Riemens, der keine Zähne aufweist, insbesondere keine bestimmte Positionierung der Rotationsvorrichtungen relativ zueinander zu beachten.

In einer vorteilhaften Ausgestaltung der Erfindung ist das Antriebselement zu einer Leistungsübertragung zumindest mit einer dritten Rotationsvorrichtung gekoppelt. Die dritte Rotationsvorrichtung ist zu einer Rotation um eine dritte Trennrotationsachse ausgebildet und weist zumindest ein in Betrieb rotierendes Trennelement auf. Insbesondere verläuft die dritte Trennrotationsachse parallel zu zumindest einer der weiteren Trennrotationsachsen und/oder hat von der zweiten Trennrotationsachse denselben Abstand wie die erste Trennrotationsachse. Bevorzugt ist die dritte Rotationsvorrichtung baugleich mit der ersten und der zweiten Rotationsvorrichtung. Dadurch, dass das Antriebselement sowohl mit der ersten Rotationsvorrichtung als auch mit der dritten Rotationsvorrichtung gekoppelt ist und insbesondere unmittelbar oberhalb der zweiten Rotationsvorrichtung angeordnet ist, lässt sich dies sowohl die für den Triebstrang notwendige Anzahl von Bauteilen als auch der Bauraumbedarf der Krauttrennvorrichtung weiter reduzieren.

Vorzugsweise umfasst das Antriebselement zumindest zwei Riemenscheiben. Die zwei Riemenscheiben sind bevorzugt entlang der Antriebsrotationsachse voneinander beabstandet oder liegen aneinander, haben je eine Anlagefläche zur Anlage eines Riemens mit gleichen Radius und/oder sind einstückig miteinander ausgebildet. Jede der Riemenscheiben hat bevorzugt zumindest eine um die Antriebsrotationsachse umlaufende Nut zur Aufnahme eines Riemens. Bevorzugt weist die dritte Rotationsvorrichtung ein zumindest eine Riemenscheibe umfassendes zweites Abtriebselement auf. Durch diese Ausbildung werden die hinsichtlich des Abtriebselementes der ersten Rotationsvorrichtung beschriebenen Vorteile auch beim Antrieb der dritten Rotationsvorrichtung verwirklicht. Dabei sind das Antriebselement und das zweite Abtriebselement mittels eines zweiten Riemens gekoppelt. Insbesondere ist der ersten Rotationsvorrichtung und der dritten Rotationsvorrichtung jeweils genau ein Riemen zugeordnet. Alternativ dazu weist die Krauttrennvorrichtung nur einen Riemen auf, durch den die erste und die dritte Rotationsvorrichtung angetrieben werden.

Das erste Abtriebselement umfasst bevorzugt zumindest eine Riemenscheibe, die relativ zu zumindest einer Riemenscheibe des zweiten Abtriebselementes in eine bezogen auf die Antriebsrotationsachse axiale Richtung versetzt angeordnet ist. Beide genannten Riemenscheiben sind bevorzugt auf einer Höhe mit einer der Riemenscheiben des Antriebselementes angeordnet. Dadurch lassen sich beide Riemen übereinander vom Antriebselement antreiben.

Bevorzugt sind das erste Abtriebselement und das zweite Abtriebselement geometrisch übereinstimmend ausgebildet. Insbesondere lassen sie sich dabei in unterschiedlichen Montagepositionen montieren, wobei das erste Abtriebselement in einer ersten Montageposition und das zweite Abtriebselement in einer zweiten Montageposition montiert ist. Durch die Einheitlichkeit der Bauteile lässt sich die Konstruktion vereinfachen und die Anzahl der vom Betreiber vorzuhaltenden Reparaturteile verringern. Besonders bevorzugt sind das erste Abtriebselement, das zweite Abtriebselement und das Antriebselement geometrisch übereinstimmend ausgebildet. Insbesondere haben sie dabei jeweils zumindest zwei Riemenscheiben, wobei nur eine der Riemenscheiben der Abtriebselemente im Betrieb genutzt wird. Hierdurch wird die Anzahl unterschiedlicher Bauteile weiter reduziert.

**In** einer vorteilhaften Ausgestaltung der Erfindung ist dem ersten Riemen eine erste Spannvorrichtung zugeordnet. Die erste Spannvorrichtung weist einen schwenkbar um eine Schwenkachse gelagerten Spannhebel, ein am Spannhebel angeordnetes Rückstellelement und ein drehbar am Spannhebel gelagertes und im Betrieb am ersten Riemen anliegendes Spannelement auf. Durch die erste Spannvorrichtung wird eine hinreichende Spannung des ersten Riemens und dadurch eine hinreichende mit dem ersten Riemen zu übertragende Leistung gewährleistet.

Bevorzugt ist dem zweiten Riemen eine zweite Spannvorrichtung zugeordnet. Die zweite Spannvorrichtung weist einen schwenkbar um eine weitere Schwenkachse gelagerten weiteren Spannhebel, ein am weiteren Spannhebel angeordnetes weiteres Rückstellelement und ein drehbar am weiteren Spannhebel gelagertes und im Betrieb am zweiten Riemen anliegendes weiteres Spannelement auf. Die Spannhebel, die Rückstellelemente und die Spannelemente der unterschiedlichen Spannvorrichtungen sind insbesondere jeweils übereinstimmend ausgebildet. Hierdurch wird der vorbeschriebene Vorteil auch hinsichtlich der dritten Rotationsvorrichtung erreicht und die Anzahl unterschiedlicher Teile in der Krauttrennvorrichtung gering gehalten.

Die Schwenkachsen der beiden Spannvorrichtungen spannen bevorzugt eine Schwenkachsenebene auf, innerhalb derer die zweite Trennrotationsachse verläuft.

Hierdurch lassen sich das Antriebselement oder ein damit verbundenes Bauteil sowie die Spannhebel besonderes einfach an einem zentralen Querträger der Krauttrennvorrichtung lagern. Außerdem kann durch diese Anordnung ein Krauttrennvorrichtungsrahmen mit geringem Materialaufwand ausgebildet werden.

Die Schwenkachsen verlaufen insbesondere jeweils durch einen Innenraum eines der Riemen. Bevorzugt liegen beide Spannelemente an einem Last- oder Leertrum des jeweiligen Riemens an. Besonders bevorzugt verlaufen sämtliche Trennrotationsachsen innerhalb der Schwenkachsenebene. Hierdurch lässt sich der Vorteil des einfachen Aufbaus weiter ausbauen.

Die zweite Spannvorrichtung ist relativ zur ersten Spannvorrichtung bevorzugt um 180° um die Antriebsrotationsachse verdreht angeordnet. Das bedeutet, dass die zweite Spannvorrichtung relativ zur ersten Spannvorrichtung an zwei zueinander orthogonalen Spiegelebenen gespiegelt angeordnet ist, in denen jeweils die Antriebsrotationsachse verläuft. Durch die damit erreichte Symmetrie wird eine einheitliche Belastung des ersten und des zweiten Riemens sichergestellt und außerdem eine gute Erreichbarkeit beider Spannvorrichtungen erreicht.

**In** einer vorteilhaften Ausgestaltung der Erfindung umfasst die Krauttrennvorrichtung ein im Betrieb um eine Zentralantriebsrotationsachse rotierendes und mit dem Antriebselement gekoppeltes Zentralantriebselement. Die Zentralantriebsrotationsachse hat vorzugsweise einen Schnittpunkt mit der Antriebsrotationsachse. Das Zentralantriebselement ist bevorzugt zu einer Leistungsübertragung mit sämtlichen Rotationsvorrichtungen gekoppelt. Insbesondere ist das Zentralantriebselement als Welle, bevorzugt als sogenannte Gelenkwelle ausgebildet, die beidenends Kreuzgelenke umfasst.

Vorzugsweise ist eine Trennrotationsachsenebene, in der zumindest zwei, insbesondere sämtliche, der Trennrotationsachsen verlaufen, relativ zu einer vertikalen Längsmittelebene um < 90°, insbesondere um < 70° angewinkelt angeordnet. Die Längsmittelebene erstreckt sich parallel zu einer bestimmungsgemäßen Fortbewegungsrichtung der Krauttrennvorrichtung und vertikal. Insbesondere verläuft die Zentralantriebsrotationsachse in der Längsmittelebene. Die Trennrotationsachsenebene ist insbesondere um 22° oder um 35° relativ zur Querrichtung angewinkelt, die wiederum rechtwinklig zur Längsmittelebene angeordnet ist.

Die Koppeleinrichtung der Krauttrennvorrichtung, insbesondere die Drei-Punkt-Aufnahme, ist bevorzugt spiegelsymmetrisch zur Längsmittelebene aufgebaut. Bevorzugt stimmen die Trennrotationsachsenebene und die Schwenkachsenebene miteinander überein. Durch die beschriebene Anwinkelung, durch die ein spitzer Winkel zwischen der Trennrotationsachsenebene und der Längsmittelebene gebildet wird, wird erreicht, dass trotz eines Abstandes der Trennrotationsachsen, der die Summe der Radien der sich anteilig zwischen den Trennrotationsachsen erstreckenden Rotationsvorrichtungen übersteigt, eine lückenlose Bearbeitung der Nutzpflanzenkultur möglich ist. Bei einer Betrachtung der Krauttrennvorrichtung in die Fortbewegungsrichtung liegt durch die Anwinkelung insbesondere trotz der vorbeschriebenen Gegebenheiten eine Überschneidung der benachbarten Rotationsvorrichtungen vor.

Vorzugsweise weist die Krauttrennvorrichtung zumindest zwei Koppeleinrichtungen, insbesondere Drei-Punkt-Aufnahmen, auf. Diese sind insbesondere in gegenüberliegenden Bereichen der Krauttrennvorrichtung und/oder voneinander abgewandt positioniert. Hierdurch ist es ermöglicht, die Krauttrennvorrichtung bei Beibehaltung der bevorzugten Fortbewegungsrichtung der Krauttrennvorrichtung sowohl im Heckanbau als auch im Frontanbau am Träger- oder Antriebsfahrzeug zu betreiben.

Bevorzugt ist das Zentralantriebselement mit dem Antriebselement zumindest mittels einer Kegelradstufe gekoppelt. Hierdurch lässt sich zuverlässig eine Rotation des Zentralantriebselementes, deren Zentralantriebsrotationsachse im Betrieb in aller Regel zumindest anteilig horizontal verläuft, auf das Antriebselement, dessen Antriebsrotationsachse bevorzugt zumindest im Wesentlichen vertikal ist, erreichen. Die Kegelradstufe weist insbesondere ein erstes Kegelrad, das zentralantriebselementseitig angeordnet ist, und ein zweites Kegelrad, das antriebselementseitig angeordnet ist, auf. Die Drehachsen des ersten und des zweiten Kegelrades sind insbesondere um 90° zueinander angewinkelt. Das erste und das zweite Kegelrad sind bevorzugt durch ein Kegelradstufengehäuse eingehaust.

Das Zentralantriebselement weist insbesondere eine Gelenkwelle mit zumindest einem Kreuzgelenk auf. Das erste Kegelrad ist bevorzugt mit einem ersten Wellenzapfen verbunden, der insbesondere aus dem Kegelradstufengehäuse hinausragt. Die Gelenkwelle ist vorzugsweise insbesondere lösbar an dem ersten Wellenzapfen angeordnet. Besonders bevorzugt ist das erste Kegelrad zusätzlich mit einem zweiten Wellenzapfen verbunden, der insbesondere auf einer vom ersten Wellenzapfen abgewandten Seite aus dem Kegelradstufengehäuse hinausragt. Insbesondere sind die beiden Wellenzapfen jeweils einer von zwei Koppeleinrichtungen zugeordnet und/oder zugewandt und ermöglichen sowohl im Heck- als auch im Frontanbau eine gleichermaßen einfache Leistungsübertragung vom Träger- oder Antriebsfahrzeug auf die Kegelradstufe.

Die Kegelradstufe ist bevorzugt zu einer Übersetzung einer Drehzahl des Zentralantriebselementes in einer Drehzahl des Antriebselementes ausgebildet. Das Übersetzungsverhältnis i ist dabei insbesondere kleiner als 1. Das bedeutet, dass die Antriebsdrehzahl im Betrieb kleiner ist als die Abtriebsdrehzahl. Hierzu hat ein das erste Kegelrad insbesondere einen größeren Wälzkreisdurchmesser als das zweite Kegelrad. Die derartig ausgebildete Kegelradstufe erlaubt einen zuverlässigen Antrieb der Rotationsvorrichtung(en), insbesondere im Vergleich zu kraftschlüssigen Getrieben und/oder Riemengetrieben. Erfindungsgemäß ist die Krauttrennvorrichtung derart ausgebildet, dass der Teil der Antriebsstrangs, der zur Energieübertragung vom Träger- oder Antriebsfahrzeug auf das Antriebselement dient, riemenlos ausgebildet ist. Durch das angegebene Übersetzungsverhältnis lässt sich die Drehzahl der Rotationsvorrichtung(en) erhöhen und somit das Kraut zuverlässiger abtrennen. Eine besonders hohe Zuverlässigkeit lässt sich, insbesondere bei Verwendung von (einer) Rotationsvorrichtung(en) mit (einem) Durchmesser(n) zwischen 500 mm und 800 mm, durch ein Übersetzungsverhältnis i erreichen, das kleiner als 0,75 oder gar kleiner als 0,5 ist.

In einer vorteilhaften Ausgestaltung der Erfindung ist zwischen dem Zentralantriebselement und dem Antriebselement, insbesondere zwischen dem Zentralantriebselement und der Kegelradstufe, eine Überlastkupplung angeordnet. Diese führt dazu, dass etwa bei einer Blockade einer der Rotationsvorrichtungen keine der Rotationsvorrichtungen weiter angetrieben wird. Die Überlastkupplung ist insbesondere als Sternratschenkupplung ausgebildet und rotiert im Betrieb bevorzugt um eine zur Antriebsrotationsachse orthogonale Überlastkupplungsrotationsachse. Alternativ oder zusätzlich dazu ist zwischen der Kegelradstufe und dem Antriebselement bevorzugt eine Klauenkupplung angeordnet. Zwischen den Kupplungspartnern der Klauenkupplung ist bevorzugt zumindest ein Dämpfungselement angeordnet, das bevorzugt aus Polyurethan ausgebildet ist. Durch die Klauenkupplung lässt sich zum einen eine Dämpfung zwischen dem Zentralantriebselement und dem Antriebselement erreichen, welche die Belastung zumindest eines Teils der Bauteile des Triebstranges reduziert. Des Weiteren erleichtert die Klauenkupplung eine zum Austausch von Verschleißteilen notwendige Demontage des Triebstranges.

Bevorzugt weist die Krauttrennvorrichtung zumindest ein, insbesondere zumindest zwei Stützräder zur Höhenführung der Krauttrennvorrichtung im Betrieb auf. Das zumindest eine Stützrad ist vorzugsweise derart angeordnet, das es im Betrieb zumindest einer der Rotationsvorrichtung in die Fortbewegungsrichtung nachläuft, um kein noch abzutrennendes Kraut zu überrollen. Insbesondere bei Vorhandensein von zwei Koppeleinrichtungen weist die Krauttrennvorrichtung bevorzugt sowohl zumindest ein, insbesondere zwei, nachlaufendes als auch zumindest ein, insbesondere zwei, in die Fortbewegungsrichtung vorlaufendes Stützrad auf. Im Falle von zumindest zwei Stützrädern bilden diese insbesondere eine Spurweite von 1.500 mm, 1.800 mm, 2.000 mm oder 2.150 mm.

Weitere Einzelheiten und Vorteile der Erfindung sind den nachfolgend beschriebenen, schematisch dargestellten Ausführungsbeispielen zu entnehmen, es zeigen:
- Fig. 1: eine perspektivische Darstellung einer ersten erfindungsgemäßen Krauttrennvorrichtung,
- Fig. 2: eine Draufsicht der ersten Krauttrennvorrichtung gem. Fig. 1,
- Fig. 3: eine weitere Draufsicht der ersten Krauttrennvorrichtung gem. Fig. 1,
- Fig. 4: eine perspektivische Darstellung eines Teils der ersten Krauttrennvorrichtung gem. Fig. 1 sowie einer Nutzpflanzenkultur,
- Fig. 5: eine perspektivische Darstellung einer zweiten erfindungsgemäßen Krauttrennvorrichtung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit dem Merkmal des Anspruchs 1. Sofern sinnvoll sind funktional gleichwirkende Teile mit identischen Bezugsziffern versehen.

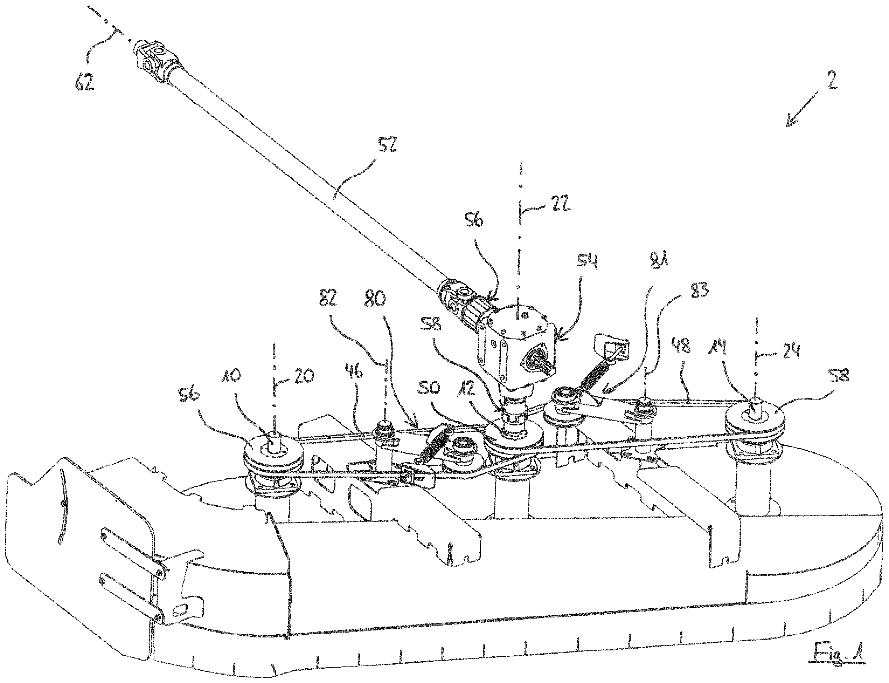

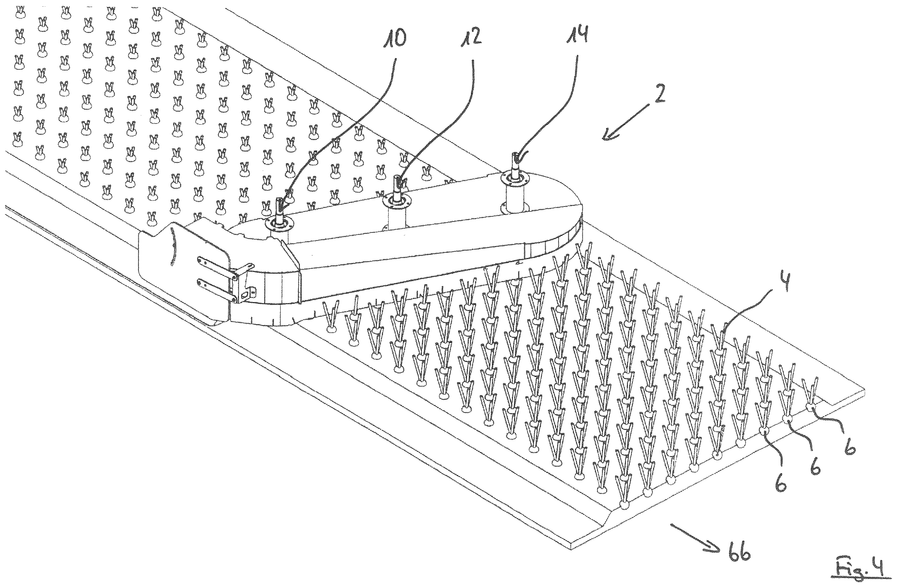

Die Fig. 1 bis 3 zeigen ein vollständiges Ausführungsbeispiel der erfindungsgemäßen ersten Krauttrennvorrichtung 2. Die erste Krauttrennvorrichtung 2 ist zum Abtrennen von Kraut 4 von Nutzpflanzen wie Speisezwiebeln 6 ausgebildet, welche in Fig. 4 schematisch gezeigt sind. Dazu wird die erste Krauttrennvorrichtung 2 im Betrieb in eine Fortbewegungsrichtung 66 über die Nutzpflanzen 6 fortbewegt.

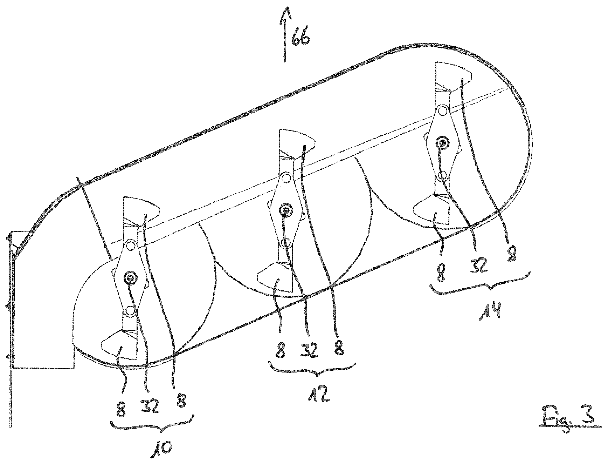

Die erste Krauttrennvorrichtung 2 umfasst eine erste Rotationsvorrichtung 10, die zu einer Rotation um eine erste Trennrotationsachse 20 ausgebildet ist, eine zweite Rotationsvorrichtung 12, die zu einer Rotation um eine zweite Trennrotationsachse 22 ausgebildet ist und eine dritte Rotationsvorrichtung 14, die zu einer Rotation um eine dritte Trennrotationsachse 24 ausgebildet ist. Fig. 3, eine Ansicht der ersten Krauttrennvorrichtung 2 von unten, zeigt, dass jede der Rotationsvorrichtungen umfasst zwei im Betrieb rotierende Trennelemente 8 sowie ein zentrales Wellenelement 32 umfasst.

In Fig. 4 nicht gezeigt wird ein Antriebsstrang mit einem Antriebselement 50 der ersten Krauttrennvorrichtung 2, das zu einer Rotation um eine Antriebsrotationsachse ausgebildet ist. Das Antriebselement 50 ist mit der ersten Rotationsvorrichtung 10 und der dritten Rotationsvorrichtung 14 gekoppelt. Die Antriebsrotationsachse und die zweite Trennrotationsachse 22 verlaufen dabei koaxial (vgl. Fig. 1). Das Antriebselement 50 ist zu einer Leistungsübertragung mit der zweiten Rotationsvorrichtung 12 gekoppelt. Dazu sind das Antriebselement 50 und das Wellenelement 32 der zweiten Rotationsvorrichtung 12 ortsfest zueinander angeordnet.

Die erste Rotationsvorrichtung 10 umfasst ein erstes Abtriebselement 56. Die dritte Rotationsvorrichtung 14 umfasst ein zweites Abtriebselement 58. Das Antriebselement 50, das erste Abtriebselement 56 und das zweite Abtriebselement 58 sind geometrisch übereinstimmend ausgebildet und umfassen jeweils zwei Riemenscheiben. Das Antriebselement 50 ist mit dem ersten Abtriebselement 56 mittels eines ersten Riemens 46 gekoppelt, der um die jeweils untere Riemenscheibe umläuft. Zumindest die Riemen 46, 48 sind im Betrieb optional von einer nicht dargestellten Abdeckung von der Umgebung abgeschirmt. Das Antriebselement 50 ist mit dem zweiten Abtriebselement 58 mittels eines zweiten Riemens 48 gekoppelt, der um die jeweils oberen Riemenscheiben umläuft.

Dem ersten Riemen 46 ist eine erste Spannvorrichtung 80 zugeordnet. Die erste Spannvorrichtung 80 umfasst einen schwenkbar um eine Schwenkachse 82 gelagerten Spannhebel 84, ein am Spannhebel 84 angeordnetes Rückstellelement 86 und ein drehbar am Spannhebel 84 gelagertes und im Betrieb am ersten Riemen 46 anliegendes Spannelement 88. Dem zweiten Riemen 48 ist eine zweite Spannvorrichtung 81 zugeordnet. Die zweite Spannvorrichtung 81 umfasst wiederum einen schwenkbar um eine weitere Schwenkachse 83 gelagerten Spannhebel 85, ein am Spannhebel 85 angeordnetes Rückstellelement 87 und ein drehbar am Spannhebel 85 gelagertes und im Betrieb am zweiten Riemen 48 anliegendes Spannelement 89.

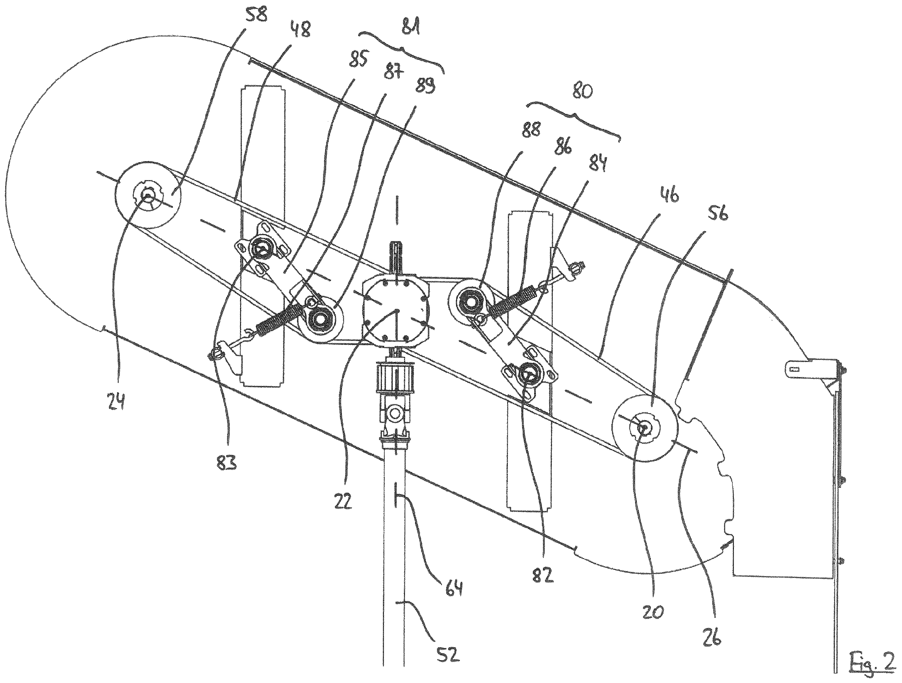

Die Spannhebel 84, 85, die Rückstellelemente 86, 87, die Spannelemente 88, 89 und die Riemen 46, 48 sind jeweils übereinstimmend zueinander ausgebildet. Die Schwenkachsen 82, 83 spannen eine Schwenkachsenebene auf, innerhalb derer die zweite Trennrotationsachse 22 verläuft. Die Schwenkachsenebene fällt zusammen mit einer Trennrotationsachsenebene 26, in der sämtliche Trennrotationsachsen 20, 22, 24 verlaufen. Die zweite Spannvorrichtung 81 ist dabei relativ zur ersten Spannvorrichtung 80 um 180° um die zweite Trennrotationsachse 22 verdreht angeordnet. Dies verdeutlicht Fig. 2, eine bezogen auf Fig. 3 gegenüberliegende Ansicht. Ein Zentralantriebselement 52 ist zu einer Leistungsübertragung mit sämtlichen Rotationsvorrichtungen 10, 12, 14 gekoppelt. Das Zentralantriebselement 52 rotiert im Betrieb um eine Zentralantriebsrotationsachse 62, die einen Schnittpunkt mit der Antriebsrotationsachse, d. h. auch mit der zweiten Trennrotationsachse 22 hat.

Die Trennrotationsachsenebene 26 ist relativ zu einer vertikalen Längsmittelebene 64, die sich parallel zur Fortbewegungsrichtung 66 und vertikal erstreckt, um weniger als 70° angewinkelt (vgl. Fig. 2). Das Zentralantriebselement 52 ist mit dem Antriebselement 50 mittels einer Kegelradstufe 54 gekoppelt, welche in Fig. 1 eingehaust dargestellt ist. Die Kegelradstufe 54 ist zur Übersetzung einer Drehzahl des Zentralantriebselementes 52 in eine Drehzahl des Antriebselementes 50 mit einem Übersetzungsverhältnis i < 0,5 ausgebildet. Zwischen dem Zentralantriebselement 52 und der Kegelradstufe 54 ist eine Überlastkupplung 56 angeordnet. Zwischen der Kegelradstufe 54 und dem Antriebselement 50 ist eine Klauenkupplung 58 angeordnet.

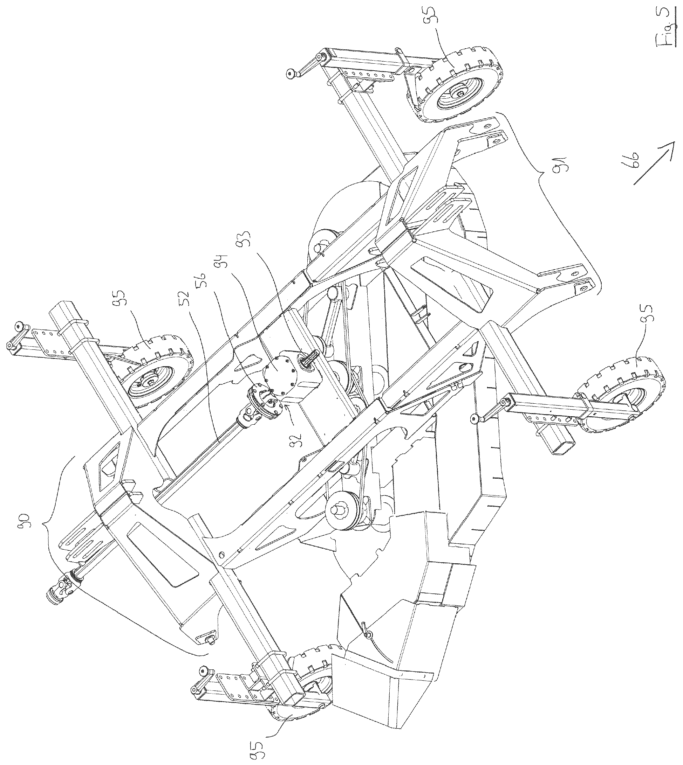

Fig. 5 offenbart eine zweite erfindungsgemäße Krauttrennvorrichtung 2, die von der gemäß den Fig. 1 bis 4 abweicht. Der Aufbau des Antriebsstrangs zwischen der Kegelradstufe 54 und den Rotationsvorrichtungen 10, 12, 14 gleicht demjenigen der ersten Krauttrennvorrichtung 2. Die zweite Krauttrennvorrichtung 2 weist außerdem zwei Drei-Punkt-Aufnahmen 90, 91 auf, die voneinander abgewandt positioniert sind und einen Betrieb der zweiten Krauttrennvorrichtung 2 sowohl im Front- als auch im Heckanbau ermöglichen, ohne die Fortbewegungsrichtung 66 ändern zu müssen.

Die zweite Krauttrennvorrichtung 2 weist ein Zentralantriebselement 52 mit einer Gelenkwelle auf. Diese ist über die Überlastkupplung 56 mit einem ersten, nicht sichtbaren, ersten Wellenzapfen 92 verbunden, der aus dem Kegelradstufengehäuse 94 hinausragt. Gegenüberliegend endet das Zentralantriebselement 52 im Bereich einer ersten der beiden Drei-Punkt-Aufnahmen 90. In Richtung der zweiten der beiden Drei-Punkt-Aufnahmen 91 ragt ein zweiter Wellenzapfen 93 aus dem Kegelradstufengehäuse 94 hinaus, mit dem die Gelenkwelle auf die gleiche Weise wie mit dem ersten Wellenzapfen 92 zu verbinden ist.

Jeder der Drei-Punkt-Aufnahmen 90, 91 sind je zwei Stützräder 95 zugeordnet. Sie sind seitlich der Drei-Punkt-Aufnahmen 90, 91 angeordnet und dienen zur Höhenführung der Trennelemente 8.

## Patentansprüche

1. Krauttrennvorrichtung (2) zum Abtrennen von Kraut (4) von Nutzpflanzen wie Speisezwiebeln (6), die zumindest eine erste Rotationsvorrichtung (10), die zu einer Rotation um eine erste Trennrotationsachse (20) ausgebildet ist und zumindest ein im Betrieb rotierendes Trennelement (8) aufweist, zumindest eine zweite Rotationsvorrichtung (12), die zu einer Rotation um eine zweite Trennrotationsachse (22) ausgebildet ist und zumindest ein im Betrieb rotierendes Trennelement (8) aufweist, und zumindest ein Antriebselement (50) umfasst, das zu einer Rotation um eine Antriebsrotationsachse ausgebildet ist und zu einer Leistungsübertragung zumindest mit der ersten Rotationsvorrichtung (10) gekoppelt ist,
**dadurch gekennzeichnet, dass** die Antriebsrotationsachse und die zweite Trennrotationsachse (22) durch zumindest einen gemeinsamen Punkt, insbesondere koaxial verlaufen, wobei die Krauttrennvorrichtung derart ausgebildet ist, dass sie im Betrieb von einem Träger- oder Antriebsfahrzeug über eine Nutzpflanzenkultur zu bewegen ist und dass ein Teil des Antriebsstrangs der Krauttrennvorrichtung, der zur Energieübertragung vom Träger- oder Antriebsfahrzeug auf das Antriebselement dient, riemenlos ausgebildet ist.

2. Krauttrennvorrichtung nach Anspruch 1, **dadurch gekennzeichnet, dass** das Antriebselement (50) oder ein dazu ortsfestes Übertragungselement zu einer Leistungsübertragung mit der zweiten Rotationsvorrichtung (12) gekoppelt ist.

3. Krauttrennvorrichtung nach Anspruch 2, **dadurch gekennzeichnet, dass** das Antriebselement (50) und ein Wellenelement (32) der zweiten Rotationsvorrichtung (12) relativ zueinander ortsfest angeordnet sind.

4. Krauttrennvorrichtung nach einem der vorhergehenden Ansprüche, **dadurch gekennzeichnet, dass** ein von der ersten Rotationsvorrichtung (10) umfasstes erstes Abtriebselement (56) zumindest eine Riemenscheibe aufweist und das Antriebselement (50) zumindest eine Riemenscheibe aufweist, wobei das Antriebselement und das erste Abtriebselement mittels eines ersten Riemens (46) gekoppelt sind.

5. Krauttrennvorrichtung nach einem der vorhergehenden Ansprüche, **dadurch gekennzeichnet, dass** das Antriebselement (50) zu einer Leistungsübertragung zumindest mit einer dritten Rotationsvorrichtung (14) gekoppelt ist, die zu einer Rotation um eine dritte Trennrotationsachse (24) ausgebildet ist und zumindest ein im Betrieb rotierendes Trennelement (8) aufweist.

6. Krauttrennvorrichtung nach den Ansprüchen 4 und 5, **dadurch gekennzeichnet, dass** das Antriebselement (50) zumindest zwei Riemenscheiben umfasst und die dritte Rotationsvorrichtung (14) ein zumindest eine Riemenscheibe umfassendes zweites Abtriebselement (58) aufweist, wobei das Antriebselement (50) und das zweite Abtriebselement (58) mittels eines zweiten Riemens (48) gekoppelt sind.

7. Krauttrennvorrichtung nach einem der vorhergehenden Ansprüche unter Einschluss von Anspruch 4, **dadurch gekennzeichnet, dass** das Antriebselement (50) und das erste Abtriebselement (56) und insbesondere das zweite Abtriebselement (58) geometrisch übereinstimmend ausgebildet sind.

8. Krauttrennvorrichtung nach einem der vorhergehenden Ansprüche unter Einschluss von Anspruch 4, **dadurch gekennzeichnet, dass** dem ersten Riemen (46) eine erste Spannvorrichtung (80) mit einem schwenkbar um eine Schwenkachse (82) gelagerten Spannhebel (84), einem am Spannhebel (86) angeordneten Rückstellelement (86) und einem drehbar am Spannhebel (84) gelagerten und im Betrieb am ersten Riemen (46) anliegenden Spannelement (88) zugeordnet ist.

9. Krauttrennvorrichtung nach den Ansprüchen 6 und 8, **dadurch gekennzeichnet, dass** dem zweiten Riemen (48) eine zweite Spannvorrichtung (81) mit einem schwenkbar um eine weitere Schwenkachse (83) gelagerten weiteren Spannhebel (85), einem am weiteren Spannhebel (85) angeordneten weiteren Rückstellelement (87) und einem drehbar am weiteren Spannhebel (85) gelagerten und im Betrieb am zweiten Riemen (48) anliegenden weiteren Spannelement (89) zugeordnet ist, wobei die Spannhebel (84, 85), die Rückstellelemente (86, 87) und die Spannelemente (88, 89) der unterschiedlichen Spannvorrichtungen (80, 81) insbesondere jeweils übereinstimmend ausgebildet sind.

10. Krauttrennvorrichtung nach Anspruch 9, **dadurch gekennzeichnet, dass** die Schwenkachsen (82, 83) eine Schwenkachsenebene aufspannen, innerhalb derer die zweite Trennrotationsachse (22) verläuft und in der insbesondere sämtliche Trennrotationsachsen (20, 22, 24) verlaufen.

11. Krauttrennvorrichtung nach Anspruch 10, **dadurch gekennzeichnet, dass** die zweite Spannvorrichtung (81) relativ zur ersten Spannvorrichtung (80) um 180° um die Antriebsrotationsachse verdreht angeordnet ist.

12. Krauttrennvorrichtung nach einem der vorhergehenden Ansprüche, **gekennzeichnet durch** ein im Betrieb um eine Zentralantriebsrotationsachse (62), die einen Schnittpunkt mir der Antriebsrotationsachse hat, rotierendes und mit dem Antriebselement (50) gekoppeltes Zentralantriebselement (52), das zu einer Leistungsübertragung mit sämtlichen Rotationsvorrichtungen (10, 12, 14) gekoppelt ist.

13. Krauttrennvorrichtung nach Anspruch 12, **dadurch gekennzeichnet, dass** eine Trennrotationsachsenebene (26), in der zumindest zwei der Trennrotationsachsen (20, 22, 24), insbesondere sämtliche Trennrotationsachsen (20, 22, 24) verlaufen, relativ zu einer vertikalen Längsmittelebene (64), die sich parallel zur Fortbewegungsrichtung (66) der Krauttrennvorrichtung (2) erstreckt und/oder in der die Zentralantriebsrotationsachse (62) verläuft, um < 90°, insbesondere um < 70° angewinkelt ist.

14. Krauttrennvorrichtung nach Anspruch 12 oder 13, **dadurch gekennzeichnet, dass** das Zentralantriebselement (52) mit dem Antriebselement (50) zumindest mittels einer Kegelradstufe (54) gekoppelt ist.

15. Krauttrennvorrichtung nach Anspruch 14, **dadurch gekennzeichnet, dass** die Kegelradstufe (54) zur Übersetzung einer Drehzahl des Zentralantriebselementes (52) in eine Drehzahl des Antriebselementes (50) mit einem Übersetzungsverhältnis i < 1, bevorzugt i < 0,75, besonders bevorzugt i < 0,5, ausgebildet ist.

16. Krauttrennvorrichtung nach einem der Ansprüche 12 bis 15, **dadurch gekennzeichnet, dass** zwischen dem Zentralantriebselement (52) und dem Antriebselement (50), insbesondere zwischen dem Zentralantriebselement (52) und der Kegelradstufe (54) eine Überlastkupplung (56) angeordnet ist und/oder zwischen der Kegelradstufe (54) und dem Antriebselement (50) eine Klauenkupplung (58) angeordnet ist.

## Claims

1. Haulm separation device (2) for separating haulm (4) from agricultural plants such as onions (6), which comprises at least one first rotation device (10) which is designed to rotate about a first separation rotation axis (20) and has at least one separation element (8) that rotates during operation, at least one second rotation device (12) which is designed to rotate about a second separation rotation axis (22) and has at least one separation element (8) that rotates during operation, and at least one drive element (50) which is designed to rotate about a drive rotation axis and for power transmission is coupled at least to the first rotation device (10),
**characterized in that** the drive rotation axis and the second separation rotation axis (22) extend, in particular coaxially, through at least one common point, wherein the haulm separation device is formed in such a manner that it is to be moved during operation by a carrier or propulsion vehicle over an agricultural crop, and **in that** part of the drive train of the haulm separation device, which serves to transmit energy from the carrier or propulsion vehicle to the drive element, is designed to be belt-less.

2. Haulm separation device according to Claim 1, **characterized in that** the drive element (50), or a transmission element stationary relative to the latter, for power transmission is coupled to the second rotation device (12).

3. Haulm separation device according to Claim **2, characterized in that** the drive element (50) and a shaft element (32) of the second rotation device (12) are disposed so as to be mutually stationary.

4. Haulm separation device according to one of the preceding claims, **characterized in that** a first output element (56) comprised by the first rotation device (10) has at least one pulley, and the drive element (50) has at least one pulley, wherein the drive element and the first output element are coupled by means of a first belt (46).

5. Haulm separation device according to one of the preceding claims, **characterized in that** the drive element (50) for power transmission is coupled at least to a third rotation device (14) which is designed to rotate about a third separation rotation axis (24) and has at least one separation element (8) which rotates during operation.

6. Haulm separation device according to Claims 4 and 5, **characterized in that** the drive element (50) comprises at least two pulleys and the third rotation device (14) has a second output element (58) comprising at least one pulley, wherein the drive element (50) and the second output element (58) are coupled by means of a second belt (48).

7. Haulm separation device according to one of the preceding claims, including Claim 4, **characterized in that** the drive element (50) and the first output element (56), and in particular the second output element (58), are designed to be geometrically in accordance with one another.

8. Haulm separation device according to one of the preceding claims, including Claim 4, **characterized in that** the first belt (46) is assigned a first tensioning device (80) having a tensioning lever (84) which is mounted so as to be pivotable about a pivot axis (82), a restoring element (86) which is disposed on the tensioning lever (86), and a tensioning element (88) which is rotatably mounted on the tensioning lever (84) and during operation rests on the first belt (46).

9. Haulm separation device according to Claims 6 and 8, **characterized in that** the second belt (48) is assigned a second tensioning device (81) having a further tensioning lever (85) which is mounted so as to be pivotable about a further pivot axis (83), a further restoring element (87) which is disposed on the further tensioning lever (85), and a further tensioning element (89) which is rotatably mounted on the further tensioning lever (85) and during operation rests on the second belt (48), wherein the tensioning levers (84, 85), the restoring elements (86, 87) and the tensioning elements (88, 89) of the various tensioning devices (80, 81) are in particular in each case designed to be in accordance with one another.

10. Haulm separation device according to Claim 9, **characterized in that** the pivot axes (82, 83) define a pivot axis plane within which the second separation rotation axis (22) extends, and in which in particular all of the separation rotation axes (20, 22, 24) extend.

11. Haulm separation device according to Claim 10, **characterized in that** the second tensioning device (81) is disposed so as to be twisted by 180° about the drive rotation axis relative to the first tensioning device (80).

12. Haulm separation device according to one of the preceding claims, **characterized by** a central drive element (52) which during operation rotates about a central drive rotation axis (62), the latter having an intersection point with the drive rotation axis, and which is coupled to the drive element (50) and for power transmission is coupled to all of the rotation devices (10, 12, 14).

13. Haulm separation device according to Claim 12, **characterized in that** a separation rotation axis plane (26), in which at least two of the separation rotation axes (20, 22, 24), in particular all of the separation rotation axes (20, 22, 24), extend, is angled by < 90°, in particular by < 70°, relative to a vertical longitudinal median plane (64) which extends parallel to the direction of movement (66) of the haulm separation device (2) and/or in which the central drive rotation axis (62) extends.

14. Haulm separation device according to Claim 12 or 13, **characterized in that** the central drive element (52) is coupled to the drive element (50) at least by means of a bevel gear stage (54).

15. Haulm separation device according to Claim 14, **characterized in that** the bevel gear stage (54) for translating a speed of the central drive element (52) into a speed of the drive element (50) is designed with a gear ratio i < 1, preferably i < 0.75, particularly preferably i < 0.5.

16. Haulm separation device according to one of Claims 12 to 15, **characterized in that** an overload clutch (56) is disposed between the central drive element (52) and the drive element (50), in particular between the central drive element (52) and the bevel gear stage (54), and/or a dog clutch (58) is disposed between the bevel gear stage (54) and the drive element (50).

## Revendications

1. Dispositif de séparation de fanes (2) pour séparer des fanes (4) de plantes utiles telles que des oignons (6), qui comprend au moins un premier dispositif de rotation (10) qui est conçu de façon à tourner autour d'un premier axe de rotation de séparation (20) et qui présente au moins un élément de séparation (8) qui tourne pendant le fonctionnement, au moins un deuxième dispositif de rotation (12), conçu de façon à tourner autour d'un deuxième axe de rotation de séparation (22) et ayant au moins un élément de séparation (8) tournant pendant le fonctionnement, et au moins un élément d'entraînement (50) conçu de façon à tourner autour d'un axe de rotation d'entraînement et relié au moins au premier dispositif rotatif (10) pour une transmission de puissance,
**caractérisé en ce que** l'axe de rotation d'entraînement et le deuxième axe de rotation de séparation (22) passent par au moins un point commun, en particulier coaxial, le dispositif de séparation de fanes étant conçu de telle sorte qu'il soit déplaçable pendant le fonctionnement par un véhicule porteur ou d'entraînement sur une culture de plantes utiles et **en ce qu'**une partie de la chaîne cinématique du dispositif de séparation de fanes, qui sert à transmettre l'énergie du véhicule porteur ou d'entraînement à l'élément d'entraînement, est conçue sans courroie.

2. Dispositif de séparation de fanes selon la revendication 1, **caractérisé en ce que** l'élément d'entraînement (50) ou un élément de transmission fixe par rapport à celui-ci est relié au deuxième dispositif rotatif (12) pour une transmission de puissance.

3. Dispositif de séparation de fanes selon la revendication 2, **caractérisé en ce que** l'élément d'entraînement (50) et un élément d'arbre (32) du deuxième dispositif rotatif (12) sont agencés de manière fixe l'un par rapport à l'autre.

4. Dispositif de séparation de fanes selon l'une des revendications précédentes, **caractérisé en ce qu'**un premier élément d'entraînement (56) compris dans le premier dispositif rotatif (10) comprend au moins une poulie, et l'élément d'entraînement (50) comprend au moins une poulie, l'élément d'entraînement et le premier élément de sortie étant reliés au moyen d'une première courroie (46).

5. Dispositif de séparation de fanes selon l'une des revendications précédentes, **caractérisé en ce que** l'élément d'entraînement (50) est relié, pour une transmission de puissance, à au moins un troisième dispositif rotatif (14) conçu de façon à tourner autour d'un troisième axe de rotation de séparation (24) et comprenant au moins un élément de séparation (8) tournant pendant le fonctionnement.

6. Dispositif de séparation de fanes selon les revendications 4 et 5, **caractérisé en ce que** l'élément d'entraînement (50) comprend au moins deux poulies et le troisième dispositif rotatif (14) comprend un deuxième élément d'entraînement (58) comprenant au moins une poulie, l'élément d'entraînement (50) et le deuxième élément d'entraînement (58) étant reliés par une deuxième courroie (48).

7. Dispositif de séparation de fanes selon l'une des revendications précédentes, y compris la revendication 4, **caractérisé en ce que** l'élément d'entraînement (50) et le premier élément d'entraînement (56), et en particulier le deuxième élément d'entraînement (58), sont réalisés de manière géométriquement identique.

8. Dispositif de séparation de fanes selon l'une des revendications précédentes, y compris la revendication 4, **caractérisé en ce qu'**à la première courroie (46) est associé un premier dispositif de tension (80) comprenant un levier tendeur (84) monté pivotant autour d'un axe de pivotement (82), un élément de rappel (86) agencé sur le levier tendeur (86) et un élément tendeur (88) monté rotatif sur le levier tendeur (84) et en appui contre la première courroie (46) pendant le fonctionnement.

9. Dispositif de séparation de fanes selon les revendications 6 et 8, **caractérisé en ce qu'**à la deuxième courroie (48) est associé un deuxième dispositif de tension (81) comprenant un autre levier tendeur (85) monté pivotant autour d'un autre axe de pivotement (83), un autre élément de rappel (87) agencé sur ledit autre levier tendeur (85) et un autre élément de tension (89) monté à rotation sur ledit autre levier tendeur (85) et s'appliquant pendant le fonctionnement sur la deuxième courroie (48), les leviers de tension (84, 85), les éléments de rappel (86, 87) et les éléments de tension (88, 89) des différents dispositifs de tension (80, 81) étant notamment chacun réalisés de manière concordante.

10. Dispositif de séparation de fanes selon la revendication 9, **caractérisé en ce que** les axes de pivotement (82, 83) définissent un plan d'axe de pivotement à l'intérieur duquel s'étend le deuxième axe de rotation de séparation (22) et dans lequel s'étendent notamment tous les axes de rotation de séparation (20, 22, 24).

11. Dispositif de séparation de fanes selon la revendication 10, **caractérisé en ce que** le deuxième dispositif de serrage (81) est agencé avec une rotation de 180° autour de l'axe de rotation d'entraînement par rapport au premier dispositif de serrage (80).

12. Dispositif de séparation de fanes selon l'une des revendications précédentes, **caractérisé par** un élément d'entraînement central (52) tournant pendant le fonctionnement autour d'un axe de rotation d'entraînement central (62) qui présente un point d'intersection avec l'axe de rotation d'entraînement, et relié à l'élément d'entraînement (50), l'élément d'entraînement central (52) étant relié à tous les dispositifs rotatifs (10, 12, 14) pour une transmission de puissance.

13. Dispositif de séparation de fanes selon la revendication 12, **caractérisé en ce qu'**un plan (26) d'axe de rotation de séparation, dans lequel s'étendent au moins deux des axes de rotation de séparation (20, 22, 24), en particulier tous les axes de rotation de séparation (20, 22, 24), est incliné de < 90°, en particulier de < 70°, par rapport à un plan médian longitudinal vertical (64), qui s'étend parallèlement à la direction de déplacement (66) du dispositif de séparation de fanes (2), et/ou dans lequel s'étend l'axe de rotation d'entraînement central (62).

14. Dispositif de séparation de fanes selon la revendication 12 ou la revendication 13, **caractérisé en ce que** l'élément d'entraînement central (52) est relié à l'élément d'entraînement (50) au moins au moyen d'un étage de rouages coniques (54).

15. Dispositif de séparation de fanes selon la revendication 14, **caractérisé en ce que** l'étage de rouages coniques (54) est conçu pour traduire une vitesse de rotation de l'élément d'entraînement central (52) en une vitesse de rotation de l'élément d'entraînement (50) avec un rapport de transmission i < 1, de préférence i < 0,75, de manière particulièrement préférée i < 0,5.

16. Dispositif de séparation de fanes selon l'une des revendications 12 à 15, **caractérisé en ce qu'**un accouplement de surcharge (56) est agencé entre l'élément d'entraînement central (52) et l'élément d'entraînement (50), en particulier entre l'élément d'entraînement central (52) et l'étage de rouages coniques (54) et/ou un accouplement à griffes (58) est agencé entre l'étage de rouages coniques (54) et l'élément d'entraînement (50).
